(19) Europäisches Patentamt
European Patent Office
Office européen des brevets

(11) **EP 4 546 609 A1**

(12) **EUROPEAN PATENT APPLICATION**

(43) Date of publication:
**30.04.2025 Bulletin 2025/18**

(21) Application number: **24201518.8**

(22) Date of filing: **20.09.2024**

(51) International Patent Classification (IPC):
**H02J 7/34** (2006.01)

(52) Cooperative Patent Classification (CPC):
**H02J 7/345**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.10.2023 US 202363545806 P**
**13.09.2024 US 202418884698**

(71) Applicant: **Aptiv Technologies AG
8200 Schaffhausen (CH)**

(72) Inventors:
• **DEUTSCH, Robert
8200 Schaffhausen (CH)**
• **AGARWAL, Rachit
8200 Schaffhausen (CH)**

(74) Representative: **Bardehle Pagenberg
Partnerschaft mbB
Patentanwälte Rechtsanwälte
Prinzregentenplatz 7
81675 München (DE)**

(54) **BACK-UP ELECTRICAL POWER SUPPLY WITH ADAPTIVE BUS VOLTAGE CONTROL BASED ON CURRENT**

(57) This disclosure presents an electrical power supply system (100) designed to power an electrical power supply bus (204) efficiently. The system (100) comprises an electronic controller (206) in communication with a bidirectional boost/buck DC/DC converter (208) connected to a charge storage medium (202), a first voltage sensor (210) monitoring the power supply bus voltage, a second voltage sensor (212) monitoring the charge storage medium (202) voltage, and a current sensor (214) measuring the charge storage medium (202) current. The electronic controller (206) is programmed to regulate the power supply bus voltage to a set target voltage (Vt) using input from the first voltage sensor (210), monitor the charge storage medium (202) voltage and current, estimate the power supply bus current based on the charge storage medium data, and adjust the power supply bus voltage to a lower target voltage (Vtn) if the estimated current exceeds a predetermined threshold.

FIG. 2

EP 4 546 609 A1

**Description**

This disclosure is directed to a back-up electrical power supply with an adaptive bus voltage control system based on current.

Typically, a back-up electrical power supply module connected to an electrical power supply bus has no ability to control the current sourced from or provided to the module. An example of this may be found in a back-up electrical power supply in a voltage stabilization system that increases the voltage while engaging the starter system of an internal combustion engine and includes a parallel DC/DC converter to recharge the charge storage medium in the module. In this example, the DC/DC is connected to the negative side of the vehicle battery. Another example is a back-up electrical power supply module which is designed to increase the voltage of the electrical power supply bus of a vehicle when the bus voltage sags due to increased loading. The module also includes a parallel DC/DC converter to recharge the charge storage medium in the module but is not configured to conduct the full current of the electrical power supply bus.

In some aspects, the techniques described herein relate to an electrical power supply configured to power an electrical power supply bus. The electrical power supply includes an electronic controller in electrical communication with (a) a bidirectional boost/buck DC/DC converter electrically coupled to a charge storage medium, (b) a first voltage sensor configured to measure a voltage of the electrical power supply bus, (c) a second voltage sensor configured to measure a voltage of the charge storage medium, and (d) a current sensor configured to measure a current of the charge storage medium. The electronic controller is configured to control the bidirectional boost/buck DC/DC converter to maintain a voltage of the electrical power supply bus at a predetermined target voltage based on input from the first voltage sensor, sense the voltage of the charge storage medium based on input from the second voltage sensor, sense the current of the charge storage medium based on input from the current sensor, estimate a current of the electrical power supply bus based on the sensed voltage of the charge storage medium and the sensed current of the charge storage medium, and control the bidirectional boost/buck DC/DC converter to decrease the voltage of the electrical power supply bus to a new target voltage less than the predetermined target voltage based on if the estimated current of the electrical power supply bus exceeds a predetermined current threshold.

In some aspects, the techniques described herein relate to an electronic controller configured to control an electrical power supply connected to an electrical power supply bus. The electrical power supply has (a) a charge storage medium, (b) a bidirectional boost/buck DC/DC converter, (c) a first voltage sensor to measure a voltage of the electrical power supply bus, (d) a second voltage sensor to measure a voltage of the charge storage medium, and (e) a current sensor to measure a current of the charge storage medium. The electronic controller includes a central processing unit and a computer readable medium. The computer readable medium stores instructions that, when executed by the central processing unit, cause the electronic controller to control the bidirectional boost/buck DC/DC converter to maintain a voltage of the electrical power supply bus at a predetermined target voltage by monitoring the first voltage sensor, sense the voltage of the charge storage medium based on input from the second voltage sensor, sense the current of the charge storage medium based on input from the current sensor, calculate an estimated current of the electrical power supply bus based on the voltage of the charge storage medium and the current of the charge storage medium, and control the bidirectional boost/buck DC/DC converter to decrease the voltage of the electrical power supply bus to a new target voltage which is less than the predetermined target voltage based on if the estimated current of the electrical power supply bus exceeding a predetermined current threshold stored in the computer readable medium.

Embodiments of the present invention will now be described by way of example with reference to the accompanying drawings, in which:

FIG. 1 shows an isometric view of a back-up electrical power supply according to some embodiments.

FIG. 2 shows a block diagram of system components of a back-up electrical power supply according to some embodiments.

FIG. 3 shows a graph of dead bands of a back-up electrical power supply according to some embodiments.

FIG. 4 shows a control diagram of a back-up electrical power supply according to some embodiments.

FIG. 5 shows another control diagram of a back-up electrical power supply according to some embodiments.

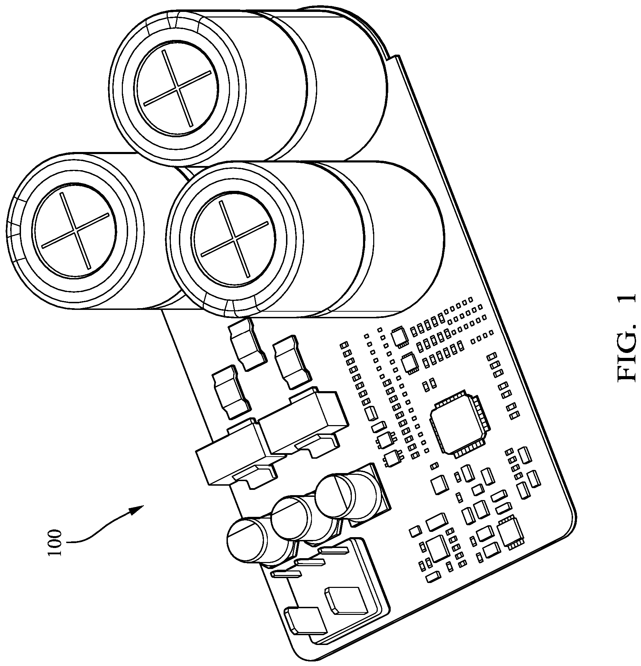

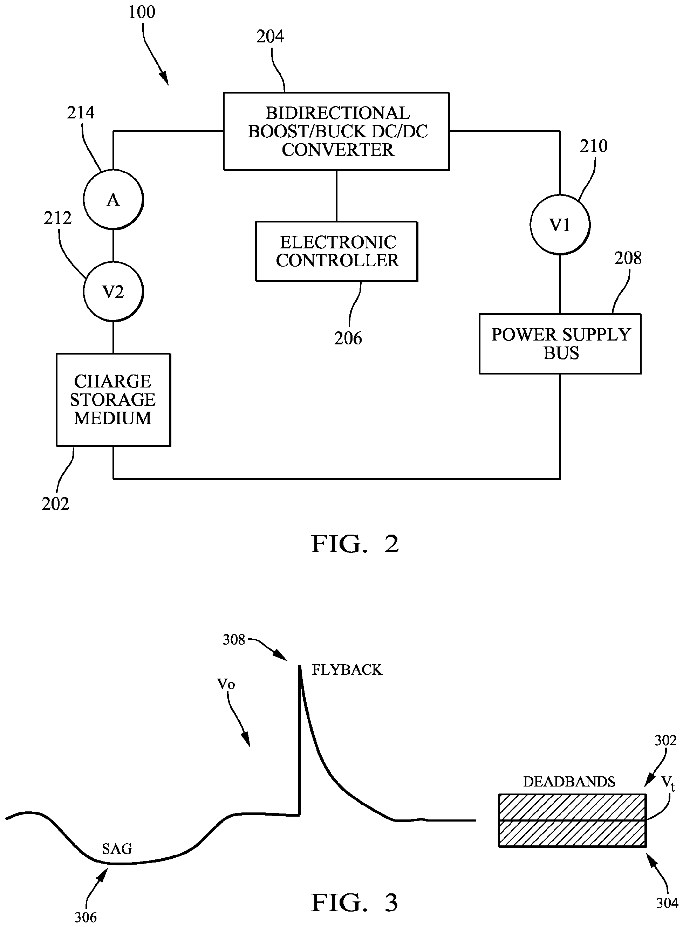

A non-limiting example of back-up electrical power supply module is shown in FIG. 1, hereafter referred to as the module 100. As shown in FIG. 2, the module 100 includes a charge storage medium, which in this example is an ultracapacitor cell stack 202 having several ultracapacitor cells. As used herein, an ultracapacitor cell is a capacitive storage device having a capacitance of at least 100 farads. In alternative embodiments, the charge storage medium may be a high charge/discharge rate battery. The module 100 further includes a bidirectional boost/buck DC/DC converter, hereafter referred to as the converter 204 that is capable of conducting at least the same current as the ultracapacitor cell stack 202 as the current flows in to or out of the ultracapacitor cell stack 202. Under the control of an electronic controller 206, the converter 204 quickly switches between boost and buck modes.

The module 100 converter translates power/energy from an electrical power supply bus 208 into ultracapacitor cell stack power/energy and vice versa. This translation, when in the condition of boosting the bus voltage, results in a parabolic power transfer function in the ultracapacitor cell stack 202. Once the peak of the transfer function is reached, non-convergence results. This is particularly true when the bus discharge current is extremely high. This high bus discharge current does not typically occur in normal operation but may occur due to continuing to provide power even if the load is outside the normal range in order to meet the an automotive safety integrity level (ASIL) of devices connected to the power supply bus 208 as defined by the ISO-26262 standard.

As shown in FIG. 2, the module furthers include a first voltage sensor 210 configured to measure a voltage of the electrical power supply bus, a second voltage sensor 212 configured to measure a voltage of the ultracapacitor cell stack 202, and a current sensor 214 configured to measure a current of the ultracapacitor cell stack 202. The electronic controller 206 is configured to control the converter 204 to maintain an operating voltage Vo of the power supply bus 208 at a predetermined target voltage based on input from the first voltage sensor 210. The electronic controller 206 is configured to sense the voltage of the ultracapacitor cell stack 202 based on input from the second voltage sensor 212 and sense the current of the ultracapacitor cell stack 202 based on input from the current sensor 214. The electronic controller 206 is further configured estimate a current of the power supply bus 208 based on the sensed voltage and the sensed current of the ultracapacitor cell stack 202 and control the converter 204 to decrease the operating voltage Vo of the power supply bus 208 to a new target bus voltage value Vtn which is less than the predetermined target bus voltage value Vt based on if the estimated current of the electrical power supply bus exceeds a predetermined current threshold.

The module 100 learns and adapts a target bus voltage with upper and lower dead bands 302, 304 as shown in FIG. 3. The upper and lower dead bands may be non-symmetrical. The upper or positive dead band 302, prevents undesired transitions to buck mode and a lower or negative dead band 304 prevents undesired transitions to boost mode. The upper and lower dead bands are centered around the target bus voltage value Vt which is determined by the electronic controller 206. In particular, the lower dead band 304 applies to the case of a voltage sag 306. When the operating voltage Vo of the power supply bus 208 is at or below a lower dead band limit of the lower dead band 304, the converter 204 will boost the operating voltage Vo with current drawn from the ultracapacitor cell stack 202. The upper dead band 302 that is shown in FIGs. 3 applies to a voltage spike 308, e.g., caused by a current flyback from an inductive load on the power supply bus 208. When the operating voltage Vo of the power supply bus 208 is at or greater than an upper dead band limit of the upper dead band 302, the converter 204 will buck current from the power supply bus 208 to the ultracapacitor cell stack 202, thereby decreasing the operating voltage Vo of power supply bus 208.

In normal operation once the operating voltage Vo has reached the upper dead band 302 limit, then the target bus voltage value Vt becomes the upper dead band 302 limit and the module 100 passes all the necessary bus power to the ultracapacitor cell stack 202 from the power supply bus 208 to maintain the operating voltage Vo at the upper dead band 302 limit (closed loop control). If the operating voltage Vo reaches the lower dead band 304 limit, then the target bus voltage value Vt becomes the lower dead band 304 limit and the module 100 passes all the necessary power from the ultracapacitor cell stack 202 to the power supply bus 208 to maintain the operating voltage Vo at the lower dead band 304 limit (closed loop control).

In conditions of extreme discharge current, i.e., above the normal operating current range of the loads connected to the bus, the converter 204 may not be able to provide this elevated level of current from the ultracapacitor cell stack 202. In this case, it may be desirable to minimize this current while still maintaining a bus voltage that is sufficient to allow loads on the power supply bus 208 to operate. This can be accomplished by a control system configured to:

    1) recognize that the power supply bus 208 current is above the operating range of the loads;
    2) immediately lower the target bus voltage value Vtn to the minimum voltage capable of supporting the loads;
    3) operate the module 100 in the closed loop control mode; and
    4) limiting the current from the ultracapacitor cell stack 202 to the maximum current possible based on current, temperature, and ultracapacitor cell stack 202 voltage.

Implementing the control system has two effects when a high discharge current occurs. First, the bus power, i.e., the bus voltage multiplied by the bus current, needed to support the bus load is reduced. Second, the ratio of the bus voltage to the cell stack voltage is also reduced. These two effects provide significant reduction of cell stack current and make convergence more possible.

In one embodiment, the module 100 learns the nominal bus voltage during one driving session and uses the nominal bus voltage value as the initial target bus voltage value Vt in future driving sessions. The nominal bus voltage is filtered and stored in memory of the electronic controller 206 along with the corresponding temperature when the bus voltage is stable, i.e., $dV/dT \approx 0$, and the vehicle is not moving. A table of nominal bus voltage and corresponding temperatures is stored in nonvolatile memory of the electronic controller 206. The nominal bus voltage value is continuously monitored and updated during a driving session. A small correction value can be applied once the vehicle is moving to account for loads. This correction value may also be provided by external controllers in the vehicle over local interconnect network (LIN) and/or controller area network (CAN) bus communication.

A correction of the target bus voltage value Vt is triggered by a bus current which is significantly higher than the normal bus current for the loads on the bus. The target bus voltage value Vt is reduced based on the magnitude of the bus current, but the target bus voltage value Vt is preferably not adjusted below a fixed lower threshold. In some examples, the fixed lower threshold is the lowest bus voltage that will support operation of the loads on the power supply bus 208.

In a non-limiting example, the target bus voltage value Vt is 14.5 volts, and the normal bus discharge current is in the 25-50A range. The ultracapacitor cell stack voltage is 7.25 volts when a discharge bus current of 100 A occurs. The target bus voltage value Vt is then lowered to 9.5 volts.

In this example, the initial power to the loads when the 100 A discharge bus current occurred was 1450 watts (14.5 volts × 100 A). The ultracapacitor cell stack current needed to support the load is 200 A (1450 watts/7.25 volts). However, after the target bus voltage value Vt is lowered to 9.5 volts, the power to the loads is reduced to 950W (9.5 volts × 100 A) and the ratio of the bus voltage to the ultracapacitor cell stack voltage is 1.31:1, therefore the current needed to be supplied by the cell stack falls to 130 A (950 watts/7.25 volts).

The module 100 described herein provides protection from overcurrent stress on the ultracapacitor cell stack 202 in the module 100. Lowering the maximum current through the converter 204 also helps to ensure that inductive elements in converter 204 do not become saturated and cause even higher currents in the converter 204 that could damage the module 100.

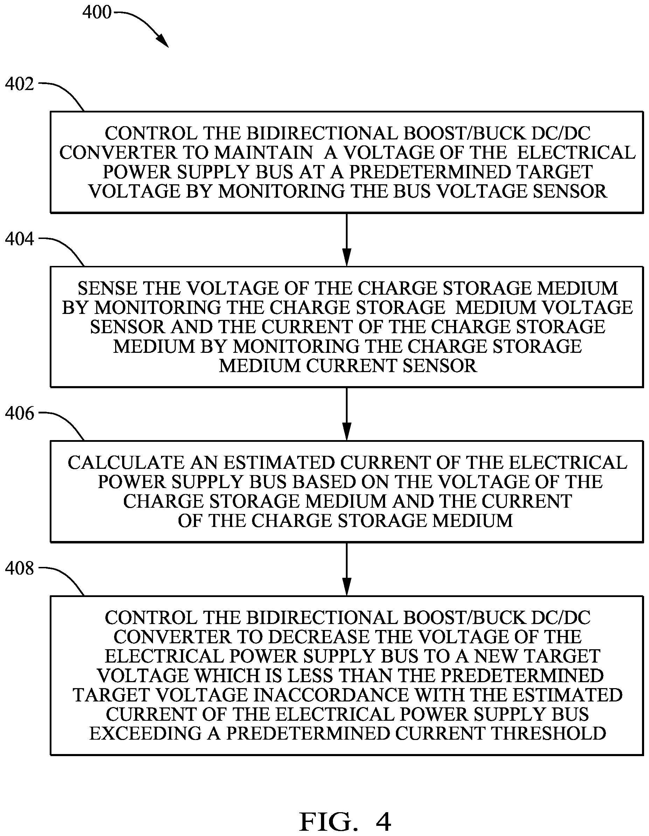

FIG. 4 is a flowchart of a method 400 having steps associated with regulating the target bus voltage value Vt of the power supply bus 208 by the converter 204 under the command of the electronic controller 206.

At step 402, the electronic controller 206 controls the converter 204 to maintain an operating voltage Vo of the power supply bus 208 at a predetermined target voltage value Vt based on input from the first voltage sensor 210.

At step 404, the electronic controller 206 senses the voltage of the ultracapacitor cell stack 202 by monitoring the second voltage sensor 212 and the current of the ultracapacitor cell stack 202 by monitoring the current sensor 214.

At step 406, the electronic controller 206 calculates an estimated current of the electrical power supply bus based on the voltage and the current of the ultracapacitor cell stack 202.

At step 408, the electronic controller 206 controls the converter 204 to decrease the operating voltage Vo of the power supply bus 208 to a new target voltage value Vtn which is less than the predetermined target voltage value Vt in accordance with the estimated current of the power supply bus 208 exceeding a predetermined current threshold.

The amount that the target bus voltage value Vt needs to be lowered due to high voltage bus current may change over time due to changes in the capacitance and equivalent series resistance (ESR) of the ultracapacitor cell stack 202 as it ages. Therefore, the new target bus voltage value Vtn calculated by the electronic controller may be further based on the present capacitance and ESR of the ultracapacitor cell stack 202. The amount that the target bus voltage value Vt should likely be decreased over time. An overly aggressive change of the target bus voltage value Vt may create noticeable affects in the loads powered by the voltage supply bus, e.g., jerking in eclectic power steering or brake systems. For that reason, it may also be desirable to have a set slew rate for reducing the target bus voltage value Vt, e.g., 500 volts per second.

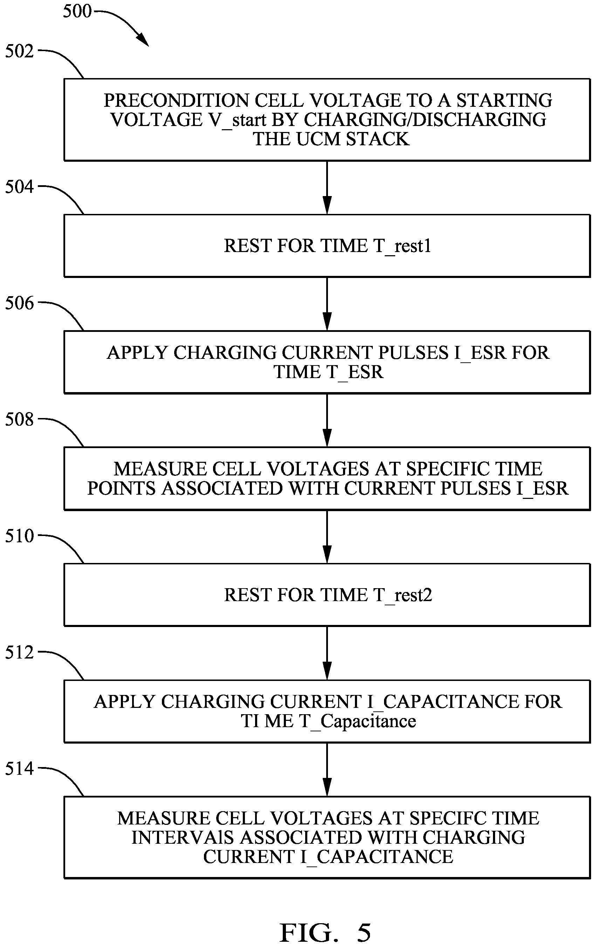

FIG. 5 is a flowchart of a method 500 having steps associated with the initiation of an ESR and capacitance test of the ultracapacitor cell stack 202 using a calibrated precision current according to some embodiments. The calibrated precision current in some embodiments is sourced via converter 204 providing a desired current profile provided to the ultracapacitor cell stack 202. Measurements are taken in response to the current profile generated including a plurality of voltages measured at specific intervals throughout the applied current profile.

In some embodiments, the steps described in FIG. 5 are performed on a cell-by-cell basis and may be performed one at a time. In other embodiments, each of the plurality of cells in the ultracapacitor cell stack 202 are analyzed simultaneously. The current profile sourced by the converter 204 to the ultracapacitor cell stack 202 is equal at each cell because the ultra-capacitors cells in the ultracapacitor cell stack 202 are connected in series with one another.

At step 502 the ultracapacitor cell stack 202 voltage is preconditioned to a starting voltage *V_start* by selectively charging/discharging the ultracapacitor cell stack 202. For example, in one embodiment the ultracapacitor cell voltage *V_start* is set equal to value of approximately 1.7V. In some embodiments, preconditioning each of the plurality of cell voltages to a desired starting voltage may require the converter 204 to provide current to the ultracapacitor cell stack 202 or receive current from the ultracapacitor cell stack 202 depending on the initial voltages associated with each ultracapacitor cell. In some embodiments, balancing of the cell voltages may further require operation of a cell balancing circuit based on a comparison of the cell voltages associated with each of the plurality of ultracapacitor cells.

At step 504, the converter 204 rests for a time period (designated *T_rest1*). During the rest time period, no current is sourced by the converter 204. For example, in one embodiment the rest period *T_rest1* is equal to 2.5 seconds.

At step 506, a charging current profile *I_ESR* is sourced by the converter 204 for a given time period (designated *T_ESR*).

At step 508, cell voltages are measures at specific time points associated with the current charging current profile *I_ESR*. In some embodiments, cell voltages are measured with respect to each of the plurality of ultracapacitor cells. For purposes of this example, voltage measurements are described with respect to the point in time at which they were collected, but it should be noted that voltage measurements may be collected for each of the plurality of ultracapacitor cells. For example, voltages $V_{T1}$, $V_{T3}$ are measured right before the current pulses end. Voltages $V_{T2}$ and $V_{T4}$ are measured right after the current pulses end. These voltage measurements may be taken with respect to each of the plurality of ultra-capacitor cells C1-C5. The equivalent series resistance (ESR) is estimated based on the following equations:

$$ESR = (V_{T1} - V_{T2})/I\_ESR\_magnitude \qquad (1)$$

OR

$$ESR = (V_{T3} - V_{T4})/I\_ESR\_magnitude \qquad (2)$$

In some embodiments, the ESR values may be estimated using both equations (1) and (2) and averaging the results. In other embodiments, a low-pass filter is applied to ESR estimations collected over a period of time. An ESR value may be measured for each of the plurality of ultracapacitor cells.

At step 510, the converter 204 rests for a time period (designated *T_rest2*). During the rest time period, no current is sourced by the converter 204. For example, in one embodiment the rest period *T_rest2* is equal to 2.5 seconds.

At step 512 a charging current profile *I_Capacitance* is sourced by the converter 204 for a given time period (designated *T_capacitance*). For example, in one embodiment the magnitude of the longer current pulse is equal to 3.25A and has a length or time of approximately 32 seconds. As compared with the current profile *I_ESR*, the current profile of *I_Capacitance* is longer in duration and has a lower magnitude.

At step 514 cell voltages are measured at specific points in time associated with the current profile *I_Capacitance*. Once again, cell voltages are measured with respect to each of the plurality of ultracapacitor cells. For purposes of this example, voltage measurements are described with respect to the point in time at which they were collected, but it should be noted that voltage measurements may be collected for each of the plurality of ultracapacitor cells. In some embodiments, the resting period *T_rest3* is equal to the other resting periods *T_rest1* and *T_rest2* (e.g., 2.5 seconds), although in other embodiments different resting times may be selected. As before, these voltage measurements may be taken with respect to each of the plurality of ultracapacitor cells. The capacitance is calculated as follows:

$$CAPACITANCE = \frac{\int_{t5}^{t6} I\_Capacitance \; dt}{V_{t7} - V_{t5}} \qquad (3)$$

In some embodiments, the ESR and capacitance values calculated in response to the current sourced by the converter 204 provides a good indication of the state of health of each individual cell. For example, an increase in ESR (e.g., increase of 100% or more) or a decay in cell capacitance (e.g., decrease of 20% or more), the cell may be identified as reaching end of life.

While the examples presented herein are directed to a back-up electrical power supply in an automotive application, other embodiments may be envisioned for other back-up electrical power supply applications.

Discussion of Possible Embodiments

The following are non-exclusive descriptions of possible embodiments of the present invention.

In some aspects, the techniques described herein relate to an electrical power supply configured to power an electrical power supply bus. The electrical power supply includes an electronic controller in electrical communication with (a) a bidirectional boost/buck DC/DC converter electrically coupled to a charge storage medium, (b) a first voltage sensor configured to measure a voltage of the electrical power supply bus, (c) a second voltage sensor configured to measure a voltage of the charge storage medium, and (d) a current sensor configured to measure a current of the charge storage medium. The electronic controller is configured to control the bidirectional boost/buck DC/DC converter to maintain a voltage of the electrical power supply bus at a predetermined target voltage based on input from the first voltage sensor, sense the voltage of the charge storage medium based on input from the second voltage sensor, sense the current of the charge storage medium based on input from the current sensor, estimate a current of the electrical power supply bus based on the sensed voltage of the charge storage medium and the sensed current of the charge storage medium, and control the bidirectional boost/buck DC/DC converter to decrease the voltage of the electrical power supply bus to a new target voltage less than the predetermined target voltage based on if the estimated current of the electrical power supply bus exceeds a predetermined current threshold.

The electrical power supply of the preceding paragraph can optionally include, additionally and/or alternatively any, one or more of the following features, configurations and/or additional components.

In some aspects, the techniques described herein relate to an electrical power supply, the new target voltage being greater than or equal to a predetermined minimum voltage.

In some aspects, the techniques described herein relate to an electrical power supply, wherein the predetermined minimum voltage is a voltage required to properly operate loads powered by the electrical power supply bus.

In some aspects, the techniques described herein relate to an electrical power supply, wherein the electronic controller is configured to decrease the voltage of the electrical power supply bus to the new target voltage at a predetermined rate.

In some aspects, the techniques described herein relate to an electrical power supply, wherein the electronic controller is further configured to: determine a capacitance and estimated series resistance of the charge storage medium based on the sensed voltage of the charge storage medium and the sensed current of the charge storage medium and modify the new target voltage based on the capacitance and the estimated series resistance.

In some aspects, the techniques described herein relate to an electrical power supply, wherein the electronic controller is further configured to: change from the predetermined target voltage to the new target voltage at a predetermined rate.

In some aspects, the techniques described herein relate to an electrical power supply, wherein the predetermined current threshold is at least 1.5 times greater than a nominal current of the electrical power supply bus.

In some aspects, the techniques described herein relate to an electrical power supply, wherein the charge storage medium includes a plurality of ultracapacitor cells.

In some aspects, the techniques described herein relate to an electrical power supply, the new target voltage being based on an equivalent series resistance and a capacitance of the plurality of ultracapacitor cells.

In some aspects, the techniques described herein relate to an electrical power supply, wherein the charge storage medium includes a plurality of hybrid supercapacitors.

In some aspects, the techniques described herein relate to an electrical power supply, wherein the charge storage medium includes a high charge rate battery.

In some aspects, the techniques described herein relate to an electrical power supply, wherein the electronic controller reduces a ratio of the voltage of the electrical power supply bus to the voltage of the charge storage medium by operating the bidirectional boost/buck DC/DC converter at the new target voltage.

In some aspects, the techniques described herein relate to an electronic controller configured to control an electrical power supply connected to an electrical power supply bus. The electrical power supply has (a) a charge storage medium, (b) a bidirectional boost/buck DC/DC converter, (c) a first voltage sensor to measure a voltage of the electrical power supply bus, (d) a second voltage sensor to measure a voltage of the charge storage medium, and (e) a current sensor to measure a current of the charge storage medium. The electronic controller includes a central processing unit and a computer readable medium. The computer readable medium stores instructions that, when executed by the central processing unit, cause the electronic controller to control the bidirectional boost/buck DC/DC converter to maintain a voltage of the electrical power supply bus at a predetermined target voltage by monitoring the first voltage sensor, sense the voltage of the charge storage medium based on input from the second voltage sensor, sense the current of the charge storage medium based on input from the current sensor, calculate an estimated current of the electrical power supply bus based on the voltage of the charge storage medium and the current of the charge storage medium, and control the bidirectional boost/buck DC/DC converter to decrease the voltage of the electrical power supply bus to a new target voltage which is less than the predetermined target voltage based on if the estimated current of the electrical power supply bus exceeding a predetermined current threshold stored in the computer readable medium.

The electronic controller of the preceding paragraph can optionally include, additionally and/or alternatively any, one or more of the following features, configurations and/or additional components.

In some aspects, the techniques described herein relate to an electronic controller, the computer readable medium storing additional instructions that, when executed by the central processing unit, cause the electronic controller to decrease the voltage of the electrical power supply bus to the new target voltage at a predetermined rate stored in the computer readable medium.

In some aspects, the techniques described herein relate to an electronic controller, the computer readable medium storing additional instructions that, when executed by the central processing unit, cause the electronic controller to: determine a capacitance and estimated series resistance of the charge storage medium based on the sensed voltage of the charge storage medium and the sensed current of the charge storage medium, and modify the new target voltage based on the capacitance and the estimated series resistance.

In some aspects, the techniques described herein relate to an electronic controller, the computer readable medium storing additional instructions that, when executed by the central processing unit, cause the electronic controller to change from the predetermined target voltage to the new target voltage at a predetermined rate.

In some aspects, the techniques described herein relate to an electronic controller, wherein the new target voltage is greater than or equal to a predetermined minimum voltage stored in the computer readable medium.

In some aspects, the techniques described herein relate to an electronic controller, wherein the predetermined minimum voltage is a minimum voltage required to properly operate loads powered by the electrical power supply bus.

In some aspects, the techniques described herein relate to an electronic controller, wherein the predetermined current threshold is at least 1.5 times greater than a nominal current of the electrical power supply bus.

In some aspects, the techniques described herein relate to an electronic controller, wherein the charge storage medium includes a plurality of ultracapacitor cells and wherein the computer readable medium stores additional instructions that, when executed by the central processing unit, cause the electronic controller to base the new target voltage being an equivalent series resistance and a capacitance of the plurality of ultracapacitor cells.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electrical power supply (100) configured to power an electrical power supply bus (208), comprising:

    an electronic controller (206) in electrical communication with:

    a) a bidirectional boost/buck DC/DC converter (204) electrically coupled to a charge storage medium (202),
    b) a first voltage sensor (210) configured to measure a voltage of the electrical power supply bus (208),
    c) a second voltage sensor (212) configured to measure a voltage of the charge storage medium (202), and
    d) a current sensor (214) configured to measure a current of the charge storage medium (202),

    the electronic controller (206) being configured to:

    control the bidirectional boost/buck DC/DC converter (204) to maintain a voltage of the electrical power supply bus (208) at a predetermined target voltage (Vt) based on input from the first voltage sensor (210), sense the voltage of the charge storage medium (202) based on input from the second voltage sensor (212),

sense the current of the charge storage medium (202) based on input from the current sensor (214), estimate a current of the electrical power supply bus (208) based on the sensed voltage of the charge storage medium (202) and the sensed current of the charge storage medium (202), and
control the bidirectional boost/buck DC/DC converter (204) to decrease the voltage of the electrical power supply bus (208) to a new target voltage (Vtn) less than the predetermined target voltage (Vt) based on if the estimated current of the electrical power supply bus (208) exceeds a predetermined current threshold.

2. The electrical power supply (100) accordance with claim 1, the new target voltage (Vtn) being greater than or equal to a predetermined minimum voltage.

3. The electrical power supply (100) in accordance with claim 2, wherein the predetermined minimum voltage is a voltage required to properly operate loads powered by the electrical power supply bus (208).

4. The electrical power supply (100) in accordance with any one of the preceding claims, wherein the electronic controller (206) is further configured to:

   determine a capacitance and estimated series resistance of the charge storage medium (202) based on the sensed voltage of the charge storage medium (202) and the sensed current of the charge storage medium (202), and
   modify the new target voltage based on the capacitance and the estimated series resistance.

5. The electrical power supply (100) in accordance with any one of the preceding claims, wherein the electronic controller (206) is further configured to:
   change from the predetermined target voltage to the new target voltage (Vtn) at a predetermined rate.

6. The electrical power supply (100) in accordance with any one of the preceding claims, wherein the electronic controller (206) is configured to decrease the voltage of the electrical power supply bus (208) to the new target voltage (Vtn) at a predetermined rate.

7. The electrical power supply (100) in accordance with any one of the preceding claims, wherein the predetermined current threshold is at least 1.5 times greater than a nominal current of the electrical power supply bus (208).

8. The electrical power supply (100) in accordance with any one of the preceding claims, wherein the charge storage medium (202) comprises a plurality of ultracapacitor cells.

9. The electrical power supply (100) in accordance with claim 8, the new target voltage (Vtn) being based on an equivalent series resistance and a capacitance of the plurality of ultracapacitor cells.

10. The electrical power supply (100) in accordance with any one of the preceding claims, wherein the charge storage medium (202) comprises a plurality of hybrid supercapacitors.

11. The electrical power supply (100) in accordance with any one of the preceding claims, wherein the charge storage medium (202) comprises a high charge rate battery.

12. The electrical power supply (100) in accordance with any one of the preceding claims, wherein the electronic controller (206) reduces a ratio of the voltage of the electrical power supply bus (208) to the voltage of the charge storage medium (202) by operating the bidirectional boost/buck DC/DC converter (204) at the new target voltage (Vtn).

13. An electronic controller (206) configured to control an electrical power supply (100) connected to an electrical power supply bus (208), the electrical power supply having:

   a) a charge storage medium (202),
   b) a bidirectional boost/buck DC/DC converter (204),
   c) a first voltage sensor (210) to measure a voltage of the electrical power supply bus (208),
   d) a second voltage sensor (212) to measure a voltage of the charge storage medium (202), and
   e) a current sensor (214) to measure a current of the charge storage medium (202),

   the electronic controller (206) comprising:

a central processing unit; and
a computer readable medium storing instructions that, when executed by the central processing unit, cause the electronic controller (206) to:

control the bidirectional boost/buck DC/DC converter (204) to maintain a voltage of the electrical power supply bus (208) at a predetermined target voltage (Vt) by monitoring the first voltage sensor (210),
sense the voltage of the charge storage medium (202) based on input from the second voltage sensor (212),
sense the current of the charge storage medium (202) based on input from the current sensor (214),
calculate an estimated current of the electrical power supply bus (208) based on the voltage of the charge storage medium (202) and the current of the charge storage medium (202), and
control the bidirectional boost/buck DC/DC converter (204) to decrease the voltage of the electrical power supply bus (208) to a new target voltage (Vtn) which is less than the predetermined target voltage (Vt) based on if the estimated current of the electrical power supply bus (208) exceeding a predetermined current threshold stored in the computer readable medium.

14. The electronic controller (206) in accordance with claim 13, the computer readable medium storing additional instructions that, when executed by the central processing unit, cause the electronic controller (206) to decrease the voltage of the electrical power supply bus (208) to the new target voltage (Vtn) at a predetermined rate stored in the computer readable medium.

15. The electronic controller (206) in accordance with claim 13, the computer readable medium storing additional instructions that, when executed by the central processing unit, cause the electronic controller (206) to:

determine a capacitance and estimated series resistance of the charge storage medium (202) based on the sensed voltage of the charge storage medium (202) and the sensed current of the charge storage medium (202), and
modify the new target voltage (Vtn) based on the capacitance and the estimated series resistance.

FIG. 1

100

204

214

BIDIRECTIONAL
BOOST/BUCK DC/DC
CONVERTER

210

212

(A)

(V1)

208

(V2)

ELECTRONIC
CONTROLLER

POWER SUPPLY
BUS

206

CHARGE
STORAGE
MEDIUM

202

## FIG. 2

308

FLYBACK

Vo

302

$V_t$

DEADBANDS

SAG

304

306

## FIG. 3

400 —

402 —

| CONTROL THE BIDIRECTIONAL BOOST/BUCK DC/DC CONVERTER TO MAINTAIN A VOLTAGE OF THE ELECTRICAL POWER SUPPLY BUS AT A PREDETERMINED TARGET VOLTAGE BY MONITORING THE BUS VOLTAGE SENSOR |

404 —

| SENSE THE VOLTAGE OF THE CHARGE STORAGE MEDIUM BY MONITORING THE CHARGE STORAGE MEDIUM VOLTAGE SENSOR AND THE CURRENT OF THE CHARGE STORAGE MEDIUM BY MONITORING THE CHARGE STORAGE MEDIUM CURRENT SENSOR |

406 —

| CALCULATE AN ESTIMATED CURRENT OF THE ELECTRICAL POWER SUPPLY BUS BASED ON THE VOLTAGE OF THE CHARGE STORAGE MEDIUM AND THE CURRENT OF THE CHARGE STORAGE MEDIUM |

408 —

| CONTROL THE BIDIRECTIONAL BOOST/BUCK DC/DC CONVERTER TO DECREASE THE VOLTAGE OF THE ELECTRICAL POWER SUPPLY BUS TO A NEW TARGET VOLTAGE WHICH IS LESS THAN THE PREDETERMINED TARGET VOLTAGE INACCORDANCE WITH THE ESTIMATED CURRENT OF THE ELECTRICAL POWER SUPPLY BUS EXCEEDING A PREDETERMINED CURRENT THRESHOLD |

## FIG. 4

500

502

PRECONDITION CELL VOLTAGE TO A STARTING
VOLTAGE V_start BY CHARGING/DISCHARGING
THE UCM STACK

504

REST FOR TIME T_rest1

506

APPLY CHARGING CURRENT PULSES I_ESR FOR
TIME T_ESR

508

MEASURE CELL VOLTAGES AT SPECIFIC TIME
POINTS ASSOCIATED WITH CURRENT PULSES I_ESR

510

REST FOR TIME T_rest2

512

APPLY CHARGING CURRENT I_CAPACITANCE FOR
TI ME T_Capacitance

514

MEASURE CELL VOLTAGES AT SPECIFC TIME
INTERVAlS ASSOCIATED WITH CHARGING
CURRENT I_CAPACITANCE

FIG. 5

Europäisches
Patentamt

European
Patent Office

Office européen
des brevets

# EUROPEAN SEARCH REPORT

Application Number

EP 24 20 1518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/028778 A1 (O'GORMAN PATRICK A [US] ET AL) 9 February 2006 (2006-02-09) * paragraphs [0003], [0032], [0035], [0036], [0042]; figures 3,4 * | 1-15 | INV.<br>H02J7/34 |
| A | US 2016/052423 A1 (ZHOU JIAN [CN] ET AL) 25 February 2016 (2016-02-25) * paragraphs [0001], [0026], [0029], [0076]; figure 1 * | 1-15 | |
| A | US 2017/302263 A1 (XU ZHUXIAN [US] ET AL) 19 October 2017 (2017-10-19) * paragraphs [0002], [0003], [0029] - [0034]; figure 2 * | 1-15 | |

TECHNICAL FIELDS
SEARCHED (IPC)

H02J

The present search report has been drawn up for all claims

| Place of search | Date of completion of the search | Examiner |
|---|---|---|
| Munich | 11 March 2025 | Hanisch, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 1518

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | Publication date |
|---|---|---|---|
| US 2006028778 A1 | 09-02-2006 | EP 1790070 A1 | 30-05-2007 |
|  |  | JP 2008509644 A | 27-03-2008 |
|  |  | US 2006028778 A1 | 09-02-2006 |
|  |  | US 2010194192 A1 | 05-08-2010 |
|  |  | US 2012261984 A1 | 18-10-2012 |
|  |  | WO 2006017675 A1 | 16-02-2006 |
| US 2016052423 A1 | 25-02-2016 | CN 105365599 A | 02-03-2016 |
|  |  | EP 2987673 A1 | 24-02-2016 |
|  |  | ES 2946175 T3 | 13-07-2023 |
|  |  | JP 6700006 B2 | 27-05-2020 |
|  |  | JP 2016047005 A | 04-04-2016 |
|  |  | KR 20160022274 A | 29-02-2016 |
|  |  | US 2016052423 A1 | 25-02-2016 |
| US 2017302263 A1 | 19-10-2017 | CN 107306077 A | 31-10-2017 |
|  |  | DE 102017107797 A1 | 19-10-2017 |
|  |  | US 2017302263 A1 | 19-10-2017 |

EPO FORM P0459

For more details about this annex : see Official Journal of the European Patent Office, No. 12/82